# EUROPEAN PATENT SPECIFICATION

(11) **EP 3 096 213 B1**
(45) Date of publication and mention of the grant of the patent: **07.11.2018**
(21) Application number: 16172679.9
(22) Date of filing: 27.12.2012
(51) Int. Cl.: G06F 1/16, G06F 3/03, H04W 52/02, G06F 3/0481

(54) **INFORMATION PROCESSING DEVICE, CONTROL METHOD THEREOF, AND PROGRAM**
INFORMATIONSVERARBEITUNGSVORRICHTUNG, STEUERUNGSVERFAHREN DAVON UND PROGRAMM
DISPOSITIF DE TRAITEMENT D'INFORMATIONS, PROCÉDÉ DE CONTRÔLE ASSOCIÉ ET PROGRAMME

(30) Priority: 28.06.2012 JP 2012145209
(43) Date of publication of application: 23.11.2016
(62) Divisional of application: 12880113.1
(73) Proprietor: NEC Corporation, Minato-ku, Tokyo 108-8001 (JP)
(72) Inventor: TAMAOKI, Ryo, Kawasaki-shi, Kanagawa 211-8666 (JP)
(74) Representative: Vossius & Partner Patentanwälte Rechtsanwälte mbB

(56) References cited:
- US-A1- 2009 099 812
- US-B1- 8 170 621

## Description

### Technical Field

The present invention relates to an information processing device, control method thereof, and program.

### Background Art

In information processing devices such as mobile phones, and smart phones, operation input is generally performed via a touch panel or key buttons. Recently, in some information processing devices, an acceleration sensor for detecting the posture of the image processing device is provided so as to permit the user to perform operation input by changing the posture of the information processing device.

For example, Patent Document 1 (JP2012-033997A) discloses a technique for performing control of switching the information processing device from a first operation mode to a second operation mode when the information processing device is placed in a predetermined posture.

Further, a Non-patent Document 1 discloses a technique wherein when the user changes the posture of the information processing device by shaking or tilting the information processing device, a specific control is performed in accordance with the change in posture. According to these techniques, the user can perform more intuitive operation input compared to that via a touch panel or key buttons.
Patent Document 1: JP2012-033997A

US 2009/099812 A1 relates to a method in the corresponding apparatus for utilizing acceleration data to identify an orientation of a mobile device.

US 8,176,621 B1 relates to a mobile device display management, wherein the display of the mobile device is managed during a voice communication session using a proximity sensor and an accelerometer.
Non-patent Document 1: "Pictorially illustrated 'Optimus bright L-07C'", [Online], [Search on June 13, 2012], Internet <URL: http://www.itmedia.co.jp/mobile/articles/ 1105/24/news017.html>

### Summary of the Invention

### Problems to be solved by the Invention

In the techniques disclosed in Patent Document 1 and Non-patent Document 1, the posture of the information processing device is used for operation control. In this case, to detect the posture of the information processing device, acceleration sensors, direction sensors and the like are used. In general, it is difficult to accurately detect difference in the posture of the information processing device by use of these sensors. Accordingly, if the operation of the information processing device is controlled based only on the posture of the information processing device, the number of the postures of the information processing device that can allocate control contents is limited, hence it is difficult to perform sensitive operation control.

The object of the present invention is to provide an information processing device, a control method thereof and program that can perform more sensitive operation control in accordance with the posture of the information processing device. The object is achieved by the independent claims. Dependent claims refer to preferred embodiments.

### Means for Solving the Problems

An exemplary information processing device includes:
an input unit that receives input;
a detecting unit that detects the posture of the information processing device; and,
a control unit that controls the operation of the information processing device in accordance with the posture of the information processing device which the detecting unit detects after confirming the presence or absence of a particular input via the input unit.

An exemplary method of controlling an information processing device includes:
receiving input via an input unit;
detecting the posture of the information processing device; and,
controlling the operation of the information processing device in accordance with the detected posture of the information processing device after confirming the presence or absence of a particular input via the input unit.

An exemplary program of the present invention causes a computer in an information processing device to execute:
a process of receiving input via an input unit;
a process of detecting the posture of the information processing device; and,
a process of controlling the operation of the information processing device in accordance with the detected posture of the information processing device after confirming the presence or absence of a particular input via the input unit.

According to the present invention, it is possible to preform operation control more sensitively in accordance with the posture of the information processing device.

### Brief Description of the Drawings

FIG. 1 is a block diagram showing the essential configuration of an information processing device of the first exemplary embodiment of the present invention.
FIG. 2 is a block diagram showing the essential configuration of an information processing device of the second exemplary embodiment of the present invention.
FIG. 3 is a flow chart showing the operation of the operation control unit shown in FIG. 2.

### Exemplary Embodiments

Exemplary embodiments for carrying out the present invention are next described with reference to the accompanying drawings.

### (First Exemplary Embodiment)

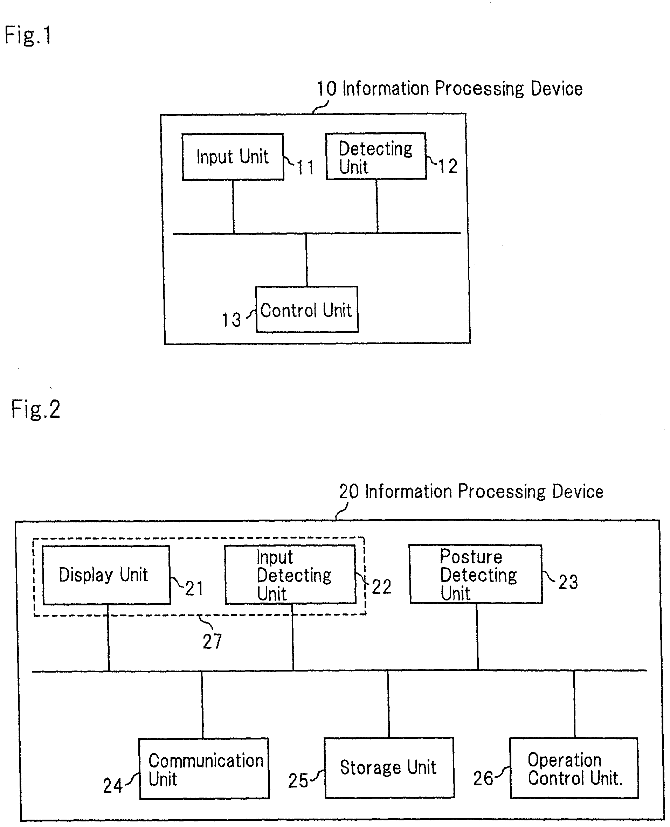

FIG. 1 is a block diagram showing the essential configuration of information processing device 10 of the first exemplary embodiment of the present invention. Here, specific examples of the information processing device according to the present invention may include mobile phones, smart phones, tablet PC (Personal Computer), notebook PC and PDA (Personal Data Assistant).

Information processing device 10 shown in FIG. 1 includes input unit 11, detecting unit 12 and control unit 13.

Input unit 11 receives input from the user. Here, specific examples of input unit 11 may include key buttons, and a touch panel that detects touch of input means such as fingers, a stylus pen, etc. and outputs a signal based on the position that the input means touches.

When input unit 11 is a touch panel, input unit 11 is composed of a display unit and a touch sensor laid over the display unit, not illustrated in FIG. 1. In this case, an operation image that shows operation content is displayed on the display unit. As the input means is touched in accordance with the display of the operation image, the touch sensor outputs a signal corresponding to the position at which the input means has touched, so that the operation content displayed at the position indicated by the signal is accepted as an input.

Here, if the touch sensor is one that detects touch of the input means from the change of the capacitance, it is also possible to detect the approach of the input means by adjusting the detection sensitivity of the change of the capacitance or the threshold of the change of the capacitance for determining the presence or absence of contact.

Detecting unit 12 detects the posture of information processing device 10 using acceleration sensors, direction sensors and others.

Control unit 13 controls the operation of information processing device 10 in accordance with the posture of information processing device 10 detected by detecting unit 12.

Next, the operation of information processing device 10 will be described focusing on the operation of control unit 13.

Control unit 13 controls the operation of information processing device 10 in accordance with the posture of information processing device 10 detected by detecting unit 12 within a predetermined period of time after confirmation of whether or not a particular input was made via input unit 11.

For example, in a case where a predetermined application is being executed, when information processing device 10 detected by detecting unit 12 is placed in a particular posture after a quit command of the application has been input as the particular input, control unit 13 terminates the application and displays the image that corresponds to execution of other applications. On the other hand, when information processing device 10 detected by detecting unit 12 is placed in a particular posture without any input of the quit command of the application, control unit 13 terminates the application and goes into sleep mode in which display of the display unit is turned off.

In this way, according to the present exemplary embodiment, information processing device 10 controls the operation of information processing device 10 in accordance with the posture of information processing device 10 which detecting unit 12 detects after confirming the presence or absence of a particular input via input unit 11.

The operation control of information processing device 10 based on the presence or absence of a particular input via input unit 11 and the posture of information processing device 10 after confirming the presence or absence of the particular input, makes it possible to perform more sensitive operation control in accordance with the posture of information processing device 10 than that when the operation control is performed based only on the posture of information processing device 10.

### (The Second Exemplary Embodiment)

FIG. 2 is a block diagram showing the essential configuration of information processing device 20 of the second exemplary embodiment of the present invention.

Information processing device 20 shown in FIG. 2 includes display unit 21, input detecting unit 22, posture detecting unit 23, communication unit 24, storage unit 25 and operation control unit 26.

Display unit 21, following the control of operation control unit 26, displays various images. Herein, display unit 21 is one example of the notifying unit.

Input detecting unit 22 is a touch sensor that detects touch of input means such as fingers, a stylus pen, etc. and outputs a signal based on the position that the input means touches. Input detecting unit 22 is laid over display unit 21 so as to form a touch panel as input unit 27. Input unit 27 corresponds to input unit 11 in the first exemplary embodiment. Here, the touch sensor, not only detects touch of the input means but also detect its approach.

Posture detecting unit 23 detects the posture of information processing device 20 using acceleration sensors, direction sensors and others. Posture detecting unit 23 corresponds to detecting unit 12 in the first exemplary embodiment.

Communication unit 24 can be connected to a plurality of communication networks such as 3G line networks, LTE (Long Term Evolution) line networks, Wi-Fi communication networks, and Internet communication networks, and connects to any one of communication networks among the plurality of available communication networks, following the control of operation control unit 26.

As operation control unit 26 executes an application, storage unit 25 stores information on the usage status of the application in accordance with execution of the application. Operation control unit 26 can execute various kinds of applications, such as a phone calling application for phone call, web page browsing application for browsing web pages, and photograph browsing application for viewing photograph. For example, when a phone calling application is executed, storage unit 25 stores information on the opposite party, date and time of the phone call and others as information relating to the usage status of the application. Further, when a web page browsing application is executed, storage unit 25 stores URLs (Uniform Resource Locator) of browsed web pages and the like as information relating to the usage status of the application. When a photography browsing application is executed, storage unit 25 stores information that indicates the browsed photographs and the like as the information relating to the usage status of the application. The information relating to the usage statues of applications stored in storage unit 25 is notified to the user by display on display unit 21 or by any other means.

Operation control unit 26 executes an application in accordance with the input via input unit 27 and makes display unit 21 display images in accordance with the execution of the application. The operation control unit 26 also controls the operation of information processing device 20 in accordance with the posture of information processing device 20, which posture detecting unit 23 detects after confirming whether or not a particular input has been made via input unit 27. Operation control unit 26 is one example of control unit 13 in the first exemplary embodiment.

Next, the operation of information processing device 20 of the present exemplary embodiment will be described focusing on the operation of operation control unit 26.

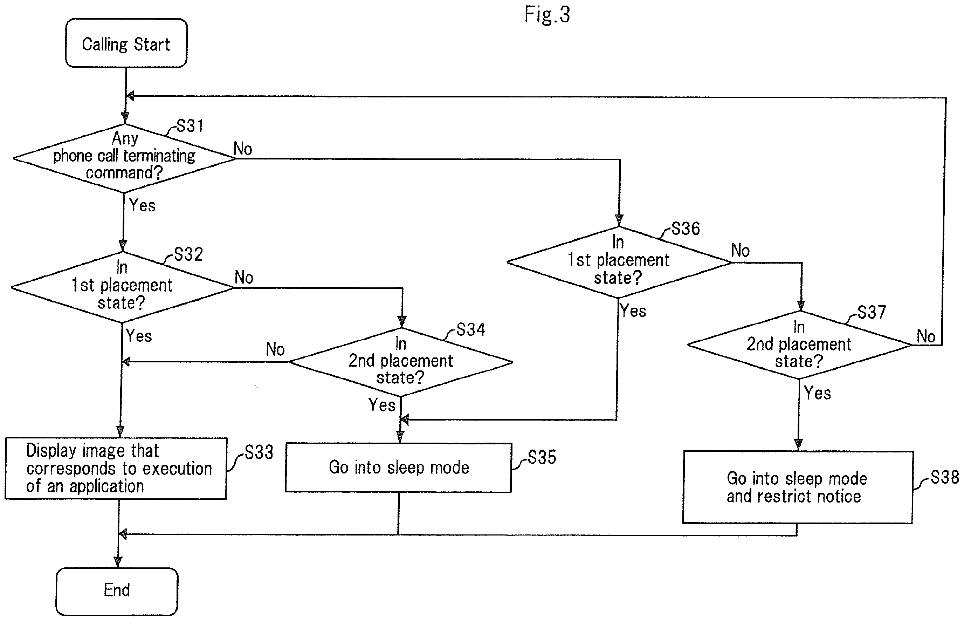

FIG. 3 is a flow chart showing the operation of control unit 26.

In the description hereinbelow, the state in which information processing device 20 is placed with display unit 21 vertically oriented upward is called the first placement state whereas the state in which information processing device 20 is placed with display unit 21 vertically oriented downward is called the second placement state.

Also it is assumed hereinbelow that operation control unit 26 has been directed to perform a phone call and executes a phone calling application. Storage unit 25 stores the opposite parties and date and time of the phone call as information relating to the usage status of the phone calling application.

In the phone calling state, operation control unit 26 periodically determines whether or not a phone call terminating command that indicates that the phone call has ended has been input via input unit 27 (Step S31).

When the phone call terminating command has been input (Step S31: Yes), operation control unit 26 determines whether or not the posture of information processing device 20 detected by posture detecting unit 23 within a predetermined period time after the input of the phone call terminating command is in the first placement state (Step S32).

When the posture of information processing device 20 is in the first placement state (Step S32: Yes), it can be considered that the user has put information processing device 20 on a desk or the like with display unit 21 vertically oriented upward after the end of the phone call. In such a situation, it is expected that the user will use another application next. Therefore, operation control unit 26 ends the telephone calling application and displays an image that corresponds to the execution of other applications on display unit 21 (Step S33).

When the posture of information processing device 20 is not in the first placement state (Step S32: No), operation control unit 26 determines whether or not the posture of information processing device 20 detected by posture detecting unit 23 is in the second placement state (Step S34).

When the posture of information processing device 20 is not in the second placement state (Step S34: No), it can be considered that the user will hold information processing device 20 and use another application after the end of the phone call. Accordingly, operation control unit 26 enters the process at Step S33 to display an image that corresponds to the execution of the application on display unit 21.

When the posture of information processing device 20 is in the second placement state (Step S34: Yes), it can be considered that the user has put information processing device 20 on a desk or the like with display unit 21 vertically oriented downward after the end of the phone call. In such a situation, it is unlikely to expect that the user will use another application next. Therefore, operation control unit 26 ends the telephone calling application and turns off display of display unit 21 and goes into sleep mode (Step S35).

When the phone call terminating command has not been input (Step S31: No), operation control unit 26 determines whether or not the posture of information processing device 20 detected by posture detecting unit 23 is in the first placement state (Step S36).

When the posture of information processing device 20 is in the first placement state (Step S36: Yes), it can be considered that in order to promptly terminate phone call, the user has put information processing device 20 on the desk or the like with display unit 21 vertically oriented upward from the state in which the user held information processing device 20 for phone call. Accordingly, operation control unit 26 enters the process at Step S35 to terminate the telephone calling application and turns off display of display unit 21 and goes into sleep mode.

When the posture of information processing device 20 is not in the first placement state (Step S36: No), operation control unit 26 determines whether or not the posture of information processing device 20 detected by posture detecting unit 23 is in the second placement state (Step S37).

When the posture of information processing device 20 is in the second placement state (Step S37: Yes), operation control unit 26 terminates the telephone calling application and turns off display of display unit 21 to go into sleep mode. Further, operation control unit 26 restricts notice of the information relating to the usage status of the telephone calling application stored in storage unit 25 as a result of the usage of the telephone calling application at this time (Step S38). Accordingly, operation control unit 26, if requested to provide notification of the information relating to the usage status of the telephone calling application, restricts display of the information relating to the usage status of the telephone calling application, on display unit 21 unless, for example a predetermined password or the like is entered.

When information processing device 20 is put in the second placement state without receiving a phone call terminating command, it is considered that the user has put information processing device 20 with display unit 21 vertically oriented downward from the state in which the user held information processing device 20 for phone call in order to promptly terminate the phone call and prevent display of display unit 21 from being seen by a third person. Accordingly, operation control unit 26 terminates the telephone calling application and goes into sleep mode, and at the same time, restricts notice of the information relating to the usage status of the telephone calling application at this time.

When the posture of information processing device 20 is not in the second placement state (Step S37: No), operation control unit 26 returns to the process at Step S31.

The description with FIG. 3 has been made by giving an example where a different operation control is performed depending on the determined placement state, by determining whether the posture of information processing device 20 is in either the first state or the second placement state. However, three or more placement states of information processing device 20 may be introduced to perform different operation controls.

Further, although the description with FIG. 3 has been made by giving an example where a telephone calling application is used, the present invention can be applied to case where a web page browsing application is used and other cases. In the case where a web page browsing application is used, URL of browsed web pages are stored in storage unit 25 as information relating to the usage status of the web application. In this case, notice of the information relating to the usage status of the web application can be restricted when information processing device 20 is placed in a predetermined posture during the usage of the web page browsing application.

Further, though the description with FIG. 3 has been described by giving an example where notice of the information relating to the usage status of the application is restricted, a configuration is also provided in which the information relating to the usage status of the application is deleted from storage unit 25.

In this way, according to the present exemplary embodiment, information processing device 20 controls the operation of information processing device 20 in accordance with the posture of information processing device 20 which posture detecting unit 23 detects after confirming the presence or absence of a particular input.

The operation control of information processing device 20 based on the presence or absence of a particular input and the posture of information processing device 20 after confirming the presence or absence of the particular input, makes it possible to perform more sensitive operation control in accordance with the posture of information processing device 20 than that when the operation control is performed based only on the posture of information processing device 20.

Here, though the present exemplary embodiment has been described by providing an example where notice is given by displaying the information relating to the usage status of the application stored in storage unit 25, on display unit 21, notice may be given by, for example, voice output using a speaker or the like.

Further, though the present exemplary embodiment has been described by giving an example where notice of the information relating to the usage status of the application is restricted, the present invention can also be applied to, for example, simplifying the input of settings required to execute applications.

As described above, communication unit 24 can be connected to a plurality of communication networks such as mobile phone networks, Wi-Fi communication networks and Internet communication networks. Now, it is assumed hereinbelow that the use fee for mobile phone networks are more expensive and have a lower communication rate than the Internet communication networks.

It is also assumed hereinbelow that as the telephone calls using information processing device 20, phone call using telephone numbers corresponding to mobile phone networks and phone call using IP (Internet Protocol) via the Internet communication networks, are permitted.

It is also assumed hereinbelow that information processing device 20 performs communication via the mobile phone network or via the Internet communication networks in order to update diverse functions of its own device or to automatically update the information stored on its own device.

Herein, if automatic updating is performed using the mobile phone network, the use charge may become prohibitive. To deal with, the user may set up the information processing device such that it will use the Internet communication network as the ordinary connection and will connect to the mobile phone network only for cases where the mobile phone network has to be used, for example, when a phone call using a telephone number corresponding to the mobile phone network is made. However such setting is troublesome for the user.

To avoid this, operation control unit 26 may be adapted to make communication unit 24 cut off connection with the mobile phone network and set up connection with the Internet communication networks from this point forwards when, for example a phone call terminating command is input during a phone call via the mobile phone network and when the posture of information processing device 20 is set in the second placement state. This arrangement causes the Internet networks to perform updating without it being necessary for the user to adjust any settings.

As a result, the user is able to use the mobile phone network that would be cost prohibitive only when making phone calls using telephone numbers corresponding to the mobile phone network and can use the Internet communication network that is available at low price or a fixed price, for communications other than the phone calls using telephone numbers corresponding to the mobile phone network, by terminating the phone call by setting information processing device 20 at the posture of the second placement state, without performing connection settings.

The method that is carried out in the information processing device of the present invention may be applied to a program that is executed by a computer. In addition, this program can be stored on a recording medium, and further, can be provided to the outside by way of a network.

Although the invention of the present application has been described with reference to exemplary embodiments, the present invention is not limited to the above-described exemplary embodiments. The configuration and details of the invention of the present application are open to various modifications within the scope of the invention of the present application that will be clear to one of ordinary skill in the art.

The present application claims priority based on Japanese Patent Application No. 2012-145209, filed on June 28, 2012.

## Claims

1. An information processing device (10, 20) comprising:
an input unit (11, 27) configured to receive input from a user;
a detecting unit (12, 23) configured to detect a posture of said information processing device (10, 20);
a control unit (13, 26) configured to control an operation of said information processing device (10, 20) in accordance with the posture of said information processing device (10, 20) which said detecting unit (12, 23) is configured to detect after confirming the presence or absence of a particular input via said input unit (11, 27);
a display unit (21);
a storage unit (25) configured to store, when an application is executed by said control unit (13, 26) in accordance with an input via said input unit (11, 27), information relating to an usage status of the application; and
a notifying unit configured to give notice of the information to the user, wherein during an execution of the application according to an input via said input unit (11, 27), if the posture of said information processing device (10, 20) which said detecting unit (12, 23) is configured to detect after receipt of an input command to terminate the application via said input unit (11, 27) is placed in a predetermined posture, said control unit (13, 26) is configured to terminate the application and to turn off display of said display unit (21), whereas if the posture of said information processing device (10, 20) which said detecting unit (12, 23) is configured to detect is placed in the predetermined posture without receiving any input command to terminate the application, said control unit (13, 26) is configured to terminate the application, to turn off display of said display unit (21) and to restrict notice of the information relating to the usage status of the application stored in said storage unit (25) via said notifying unit.

2. The information processing device (10, 20) according to claim 1, wherein said control unit (13, 26), after confirming the presence or absence of a particular input via said input unit (11, 27), is further configured to determine, from among a plurality of predetermined postures, the posture that corresponds to posture of said information processing device (10, 20) detected by said detecting unit (12, 23), and to control the operation of said information processing device (10, 20) in a different mode in accordance with the posture of said information processing device (10, 20) which said detecting unit (12, 23) has detected from the plurality of predetermined postures.

3. The information processing device (10, 20) according to claim 1 or 2, wherein if the posture of said information processing device (10, 20) which said detecting unit (12, 23) is configured to detect is placed in the predetermined posture without receiving any input command to terminate the application via said input unit (11, 27), said control unit (13, 26) is further configured to delete the information relating to the usage status of the application stored in said storage unit (25).

4. The information processing device (10, 20) according to any one of claims 1 to 3, wherein said control unit (13, 26) is configured to control the operation of said information processing device (10, 20) in accordance with the posture of said information processing device (10, 20) which said detecting unit (12, 23) is configured to detect within a predetermined period of time after confirming the presence or absence of a particular input via said input unit (11, 27).

5. The information processing device (10, 20) according to claim 1, further comprising a communication unit that can be connected to a plurality of communication networks, wherein
during an execution of an application in connection with any one of the plurality of communication networks via said communication unit, if the posture of said information processing device (10, 20) which said detecting unit (12, 23) is configured to detect is placed in a predetermined posture without receiving any input command to terminate the application via said input unit (11, 27), said control unit (13, 26) is further configured to make said communication unit cut off any connection with any of the plurality of communication networks, and to set up a communication network previously determined among the plurality of communication networks, as the communication network to which a connection is connected.

6. A control method of an information processing device (10, 20) comprising:
receiving input from a user via an input unit (11, 27);
detecting the posture of said information processing device (10, 20); ,
controlling the operation of said information processing device (10, 20) in accordance with the detected posture of said information processing device (10, 20) after confirming the presence or absence of a particular input via said input unit (11, 27); storing, when an application is executed according to an input via said input unit (11, 27), information relating to an usage status of the application; giving notice of the information to the user; and during an execution of the application according to an input via said input unit (11, 27), if the posture of said information processing device (10, 20) which is detected after receipt of an input command to terminate the application via said input unit (11, 27) is placed in a predetermined posture, terminating the application and turning off display of a display unit (21), whereas if the posture of said information processing device (10, 20) which is detected is placed in the predetermined posture without receiving any input command to terminate the application, terminating the application, turning off display of said display unit (21) and restricting notice of the information relating to the usage status of the application stored in a storage unit (25) via said notifying unit.

7. A computer program comprising instructions which, when the program is executed by a computer in an information processing device (10, 20), cause the computer to carry out:
a process of receiving input from user via an input unit (11, 27);
a process of detecting the posture of said information processing device (10, 20);
a process of controlling the operation of said information processing device (10, 20) in accordance with the detected posture of said information processing device (10, 20) after confirming the presence or absence of a particular input via said input unit (11, 27); a process of storing, when an application is executed according to an input via said input unit (11, 27), information relating to an usage status of the application; a process of giving notice of the information to the user; and
a process of, during an execution of the application according to an input via said input unit (11, 27), if the posture of said information processing device (10, 20) which is detected after receipt of an input command to terminate the application via said input unit (11, 27) is placed in a predetermined posture, terminating the application and turning off display of a display unit (21), whereas if the posture of said information processing device (10, 20) which is detected is placed in the predetermined posture without receiving any input command to terminate the application, terminating the application, turning off display of said display unit (21) and restricting notice of the information relating to the usage status of the application stored in a storage unit (25) via said notifying unit.

## Patentansprüche

1. Informationsverarbeitungsvorrichtung (10, 20) mit:
einer Eingabeeinrichtung (11, 27) zum Empfangen einer Eingabe eines Nutzers;
einer Erfassungseinrichtung (12, 23) zum Erfassen einer Haltung der Informationsverarbeitungsvorrichtung (10, 20);
einer Steuereinrichtung (13,26) zur Steuerung eines Betriebs der Informationsverarbeitungsvorrichtung (10, 20) gemäß der Haltung der Informationsverarbeitungsvorrichtung (10, 20), zu deren Erfassung die Erfassungseinrichtung (12, 23) ausgebildet ist, wenn die An- oder Abwesenheit einer bestimmten Eingabe durch die Eingabeeinrichtung (11, 27) bestätigt wird,
eine Anzeigeeinrichtung (21),
eine Speichereinrichtung (25) zum Speichern von Information zu einem Nutzungsstatus einer Anwendung, wenn die Anwendung durch die Steuereinrichtung (13, 26) gemäß einer Eingabe durch die Eingabeeinrichtung (11, 27) ausgeführt wird, und
eine Benachrichtigungseinrichtung zum Benachrichtigen des Nutzers über die Information, wobei die Steuereinrichtung (13, 26) während der Ausführung der Anwendung gemäß einer Eingabe durch die Eingabeeinrichtung (11, 27), wenn die Haltung der Informationsverarbeitungsvorrichtung (10, 20), zu deren Erfassung die Erfassungseinrichtung (12, 23) nach Empfang eines Eingabebefehls zum Beenden der Anwendung durch die Eingabeeinrichtung (11, 27) ausgebildet ist, in eine bestimmte Haltung gebracht wird, ausgebildet ist, die Anwendung zu beenden und die Anzeige der Anzeigeeinrichtung (21) zu beenden, wohingegen die Steuereinrichtung (13, 26), wenn die Haltung der Informationsverarbeitungsvorrichtung (10, 20), zu deren Erfassung die Erfassungseinrichtung (12, 23) ausgebildet ist, ohne Empfang eines Eingabebefehls zum Beenden der Anwendung in die bestimmte Haltung gebracht wird, ausgebildet ist, die Anwendung zu beenden, die Anzeigeeinrichtung (21) abzuschalten und eine Benachrichtigung über die in der Speichereinrichtung (25) gespeicherten Information zum Nutzungsstatus der Anwendung einzuschränken.

2. Informationsverarbeitungsvorrichtung (10, 20) nach Anspruch 1, wobei die Steuereinrichtung (13, 26) nach Bestätigung der An- oder Abwesenheit einer bestimmten Eingabe durch die Eingabeeinrichtung (11, 27) ferner ausgebildet ist, aus einer Vielzahl von bestimmten Haltungen die Haltung zu bestimmen, die der durch die Erfassungseinrichtung (12,23) erfassten Haltung der Informationsverarbeitungsvorrichtung (10, 20) entspricht, und den Betrieb der Informationsverarbeitungsvorrichtung (10, 20) in einem anderen Modus gemäß der Haltung der Informationsverarbeitungsvorrichtung (10, 20), die die Erfassungseinrichtung (12, 23) aus der Vielzahl von bestimmten Haltungen erfasst hat, zu steuern.

3. Informationsverarbeitungsvorrichtung (10, 20) nach Anspruch 1 oder 2, wobei die Steuereinrichtung (13, 26), wenn die Haltung der Informationsverarbeitungsvorrichtung (10, 20), zu deren Erfassung die Erfassungseinrichtung (12, 23) ausgebildet ist, ohne Empfang eines Eingabebefehls zum Beenden der Anwendung durch die Eingabeeinrichtung (11, 27) in die bestimmte Haltung gebracht wird, ferner ausgebildet ist, die in der Speichereinrichtung (25) gespeicherte Information zum Nutzungsstatus der Anwendung zu löschen.

4. Informationsverarbeitungsvorrichtung (10, 20) nach einem der Ansprüche 1 bis 3, wobei die Steuereinrichtung (13,26) ausgebildet ist, den Betrieb der Informationsverarbeitungsvorrichtung (10, 20) gemäß der Haltung der Informationsverarbeitungsvorrichtung (10, 20), zu deren Erfassung die Erfassungseinrichtung (12, 23) innerhalb eines bestimmten Zeitraums nach der Bestätigung der An- oder Abwesenheit einer bestimmten Eingabe durch die Eingabeeinrichtung (11, 27) ausgebildet ist, zu steuern.

5. Informationsverarbeitungsvorrichtung (10, 20) nach Anspruch 1, ferner mit einer Kommunikationseinrichtung, die mit einer Vielzahl von Kommunikationsnetzwerken verbunden werden kann, wobei die Steuereinrichtung (13, 26) während einer Ausführung einer Anwendung in Verbindung mit einer der Vielzahl von Kommunikationsnetzwerken durch die Kommunikationseinrichtung, wenn die Haltung der Informationsverarbeitungsvorrichtung (10, 20), zu deren Erfassung die Erfassungseinrichtung (12, 23) ausgebildet ist, ohne Empfang eines Eingabebefehls zum Beenden der Anwendung durch die Eingabeeinrichtung (11, 27) in eine bestimmte Haltung gebracht wird, wobei die Steuereinrichtung (13, 26) ferner ausgebildet ist, die Kommunikationseinrichtung zu veranlassen, jegliche Verbindung mit jeder der Vielzahl von Kommunikationsnetzwerken zu beenden, und ein Kommunikationsnetzwerk, das vorher aus der Vielzahl von Kommunikationsnetzwerken bestimmt wurde, als das Kommunikationsnetzwerk ausgebildet wird, mit dem eine Verbindung hergestellt wird.

6. Verfahren zur Steuerung einer Informationsverarbeitungsvorrichtung (10, 20), mit:
Empfangen einer Eingabe eines Nutzers durch eine Eingabeeinrichtung (11, 27),
Erfassen der Haltung der Informationsverarbeitungsvorrichtung (10, 20),
Steuern des Betriebs der Informationsverarbeitungsvorrichtung (10, 20) gemäß der erfassten Haltung der Informationsverarbeitungsvorrichtung (10, 20) nach Bestätigung der An- oder Abwesenheit einer bestimmten Eingabe durch die Eingabeeinrichtung (11, 27), Speichern von Information zu einem Nutzungsstatus der Anwendung, wenn die Anwendung gemäß einer Eingabe durch die Eingabeeinrichtung (11, 27) ausgeführt wird, Benachrichtigen des Nutzers über die Information und
während der Ausführung der Anwendung gemäß einer Eingabe durch die Eingabeeinrichtung (11,27), wenn die Haltung der Informationsverarbeitungsvorrichtung (10, 20), der nach Erhalt eines Eingabebefehls zum Beenden der Anwendung durch die Eingabeeinrichtung (11, 27) erfasst wird, in eine bestimmte Haltung gebracht wird, Beenden der Anwendung und Abschalten der Anzeige einer Anzeigeeinrichtung (21), und stattdessen, wenn die Haltung der Informationsverarbeitungsvorrichtung (10, 20), die erfasst wird, ohne Empfang eines Eingabebefehls zum Beenden der Anwendung in die bestimmte Haltung gebracht wird, Beenden der Anwendung, Abschalten der Anzeige der Anzeigeeinrichtung (21) und Einschränken der Benachrichtigung über die in einer Speichereinrichtung (25) gespeicherten Information zum Nutzungsstatus der Anwendung durch die Benachrichtigungseinrichtung.

7. Computerprogramm mit Befehlen, die, wenn das Programm von einem Computer in einer Informationsverarbeitungsvorrichtung (10, 20) ausgeführt wird, den Computer veranlassen auszuführen:
ein Verfahren zum Empfangen einer Eingabe eines Nutzers durch eine Eingabeeinrichtung (11, 27),
ein Verfahren zum Erfassen der Haltung der Informationsverarbeitungsvorrichtung (10, 20),
ein Verfahren zum Steuern des Betriebs der Informationsverarbeitungsvorrichtung (10, 20) gemäß der erfassten Haltung der Informationsverarbeitungsvorrichtung (10, 20) nach Bestätigung der An- oder Abwesenheit einer bestimmten Eingabe durch die Eingabeeinheit (11, 27), ein Verfahren zum Speichern von Information zum Nutzungsstatus einer Anwendung, wenn die Anwendung gemäß einer Eingabe durch die Eingabeeinrichtung (11, 27) ausgeführt wird, ein Verfahren zur Benachrichtigung des Nutzers über die Information und,
während einer Ausführung der Anwendung gemäß einer Eingabe durch die Eingabeeinrichtung (11,27), wenn die Haltung der Informationsverarbeitungsvorrichtung (10, 20), die nach Eingabe eines Befehls zum Beenden der Anwendung durch die Eingabeeinrichtung (11, 27) erfasst wird, in eine bestimmte Haltung gebracht wird, Verfahren zum Beenden der Anwendung und Abschalten der Anzeige einer Anzeigeeinrichtung (21) und stattdessen, wenn die Haltung der Informationsverarbeitungsvorrichtung (10, 20), die erfasst wird, ohne Empfang eines Eingabebefehls zum Beenden der Anwendung in die bestimmte Haltung gebracht wird, Beenden der Anwendung und Abschalten der Anzeige der Anzeigeeinrichtung (21) und Einschränken der Benachrichtigung über die in der Speichereinrichtung (25) gespeicherte Information zum Nutzungsstatus der Anwendung durch die Benachrichtigungseinrichtung.

## Revendications

1. Dispositif de traitement d'informations (10, 20), comprenant :
une unité d'entrée (11, 27) prévue pour recevoir une entrée d'un utilisateur ;
une unité de détection (12, 23) prévue pour détecter une position du dispositif de traitement d'informations (10, 20) ;
une unité de commande (13, 26) prévue pour commander un fonctionnement du dispositif de traitement d'informations (10, 20) en fonction de la position du dispositif de traitement d'informations (10, 20) que l'unité de détection (12, 23) est prévue pour détecter après confirmation de la présence ou de l'absence d'une entrée particulière par l'unité d'entrée (11, 27) ;
une unité d'affichage (21) ;
une unité de mémorisation (25) prévue pour mémoriser, lorsqu'une application est exécutée par l'unité de commande (13, 26) en fonction d'une entrée par l'unité d'entrée (11, 27), une information relative à un état d'utilisation de l'application ; et
une unité de notification prévue pour notifier l'information à l'utilisateur, où, pendant une exécution de l'application conformément à une entrée par l'unité d'entrée (11, 27), si la position du dispositif de traitement d'informations (10, 20) que l'unité de détection (12, 23) est prévue pour détecter après réception d'une instruction d'entrée de mettre fin à l'application par l'unité d'entrée (11, 27), correspond à une position définie, l'unité de commande (13, 26) est prévue pour mettre fin à l'application et pour désactiver l'affichage de l'unité d'affichage (21), alors que, si la position du dispositif de traitement d'informations (10, 20) que l'unité de détection (12, 23) est prévue pour détecter correspond à la position définie sans réception d'une instruction d'entrée de mettre fin à l'application, l'unité de commande (13, 26) est prévue pour mettre fin à l'application, désactiver l'affichage de l'unité d'affichage (21) et pour empêcher la notification de l'information relative à l'état d'utilisation de l'application mémorisée dans l'unité de mémorisation (25) par l'unité de notification.

2. Dispositif de traitement d'informations (10, 20) selon la revendication 1, où l'unité de commande (13, 26), après confirmation de la présence ou de l'absence d'une entrée particulière par l'unité d'entrée (11, 27), est en outre prévue pour déterminer, parmi une pluralité de positions définies, la position correspondent à la position du dispositif de traitement d'informations (10, 20) détectée par l'unité de détection (12, 23), et pour commander le fonctionnement du dispositif de traitement d'informations (10, 20) dans un mode différent en fonction de la position du dispositif de traitement d'informations (10, 20) que l'unité de détection (12, 23) a détectée parmi la pluralité de positions définies.

3. Dispositif de traitement d'informations (10, 20) selon la revendication 1 ou la revendication 2, où, si la position du dispositif de traitement d'informations (10, 20) que l'unité de détection (12, 23) est prévue pour détecter correspond à la position définie sans réception d'une instruction d'entrée de mettre fin à l'application par l'unité d'entrée (11, 27), l'unité de commande (13, 26) est en outre prévue pour supprimer l'information relative à l'état d'utilisation de l'application mémorisée dans l'unité de mémorisation (25).

4. Dispositif de traitement d'informations (10, 20) selon l'une des revendications 1 à 3, où l'unité de commande (13, 26) est prévue pour commander le fonctionnement du dispositif de traitement d'informations (10, 20) en fonction de la position du dispositif de traitement d'informations (10, 20) que l'unité de détection (12, 23) est prévue pour détecter pendant une durée définie après confirmation de la présence ou de l'absence d'une entrée particulière par l'unité d'entrée (11, 27).

5. Dispositif de traitement d'informations (10, 20) selon la revendication 1, comprenant en outre une unité de communication pouvant être reliée à une pluralité de réseaux de communication, où, pendant une exécution d'une application en liaison avec un réseau quelconque de la pluralité de réseaux de communication via l'unité de communication, si la position du dispositif de traitement d'informations (10, 20) que l'unité de détection (12, 23) est prévue pour détecter correspond à une position définie sans réception d'une instruction d'entrée de mettre fin à l'application par l'unité d'entrée (11, 27), l'unité de commande (13, 26) est en outre prévue pour amener l'unité de communication à couper toute liaison avec tout réseau de la pluralité de réseaux de communication, et pour établir un réseau de communication préalablement défini parmi la pluralité de réseaux de communication comme réseau de communication vers lequel une liaison est réalisée.

6. Procédé de commande d'un dispositif de traitement d'informations (10, 20) comprenant :
la réception d'une entrée d'un utilisateur par une unité d'entrée (11, 27) ;
la détection de la position du dispositif de traitement d'informations (10, 20) ;
la commande du fonctionnement du dispositif de traitement d'informations (10, 20) en fonction de la position détectée du dispositif de traitement d'informations (10, 20) après confirmation de présence ou de l'absence d'une entrée particulière par l'unité d'entrée (11, 27) ;
la mémorisation, lorsqu'une application est exécutée en fonction d'une entrée par l'unité d'entrée (11, 27), d'une information relative à un état d'utilisation de l'application ;
la notification de l'information à l'utilisateur ; et
pendant une exécution de l'application conformément à une entrée par l'unité d'entrée (11, 27), si la position du dispositif de traitement d'informations (10, 20) détectée après réception d'une instruction d'entrée de mettre fin à l'application par l'unité d'entrée (11, 27), correspond à une position définie, l'arrêt de l'application et la désactivation de l'affichage d'une unité d'affichage (21), et, si la position du dispositif de traitement d'informations (10, 20) détectée correspond à la position définie sans réception d'une instruction d'entrée de mettre fin à l'application, l'arrêt de l'application, la désactivation de l'affichage de l'unité d'affichage (21) et le blocage de la notification de l'information relative à l'état d'utilisation de l'application mémorisée dans une unité de mémorisation (25) par l'unité de notification.

7. Programme informatique comprenant des instructions qui, si le programme est lancé sur un ordinateur dans un dispositif de traitement d'informations (10, 20), entraînent l'exécution par ledit ordinateur :
d'un processus de réception d'une entrée d'un utilisateur par une unité d'entrée (11, 27) ;
d'un processus de détection de la position du dispositif de traitement d'informations (10, 20) ;
d'un processus de commande du fonctionnement du dispositif de traitement d'informations (10, 20) en fonction de la position détectée du dispositif de traitement d'informations (10, 20) après confirmation de la présence ou de l'absence d'une entrée particulière par l'unité d'entrée (11, 27) ;
d'un processus de mémorisation, lorsqu'une application est exécutée en fonction d'une entrée par l'unité d'entrée (11, 27), d'une information relative à un état d'utilisation de l'application ;
d'un processus de notification de l'information à l'utilisateur ; et,
pendant une exécution de l'application conformément à une entrée par l'unité d'entrée (11, 27), si la position du dispositif de traitement d'informations (10, 20) détectée après réception d'une instruction d'entrée de mettre fin à l'application par l'unité d'entrée (11, 27), correspond à une position définie, d'un processus d'arrêt de l'application et de désactivation de l'affichage d'une unité d'affichage (21), et, si la position détectée du dispositif de traitement d'informations (10, 20) correspond à la position définie sans réception d'une instruction d'entrée de mettre fin à l'application, l'arrêt de l'application, la désactivation de l'affichage de l'unité d'affichage (21) et le blocage d'une notification de l'information relative à l'état d'utilisation de l'application mémorisée dans une unité de mémorisation (25) par l'unité de notification.
